# EUROPEAN PATENT APPLICATION

(11) **EP 4 154 724 A1**
(43) Date of publication of application: **29.03.2023**
(21) Application number: 21809466.2
(22) Date of filing: 26.04.2021
(51) Int. Cl.: A23F 5/02, A23F 5/04, A23F 5/24

(54) **METHOD FOR PRODUCING ALCOHOL-CONTAINING GREEN COFFEE BEANS**

(30) Priority: 18.05.2020 JP 2020086850
(71) Applicant: Suntory Holdings Limited, Osaka 530-8203 (JP)
(72) Inventor: NAKAJIMA, Makoto, Kawasaki-shi, Kanagawa 211-0067 (JP); SOGUCHI, Akira, Kawasaki-shi, Kanagawa 211-0067 (JP); SUZUKI, Tomonori, Kawasaki-shi, Kanagawa 211-0067 (JP); KAMEZAWA, Nao, Kawasaki-shi, Kanagawa 211-0067 (JP)
(74) Representative: Potter Clarkson
(86) International application number: PCT/JP2021/016606
(87) International publication number: WO 2021/235183

(57) **Abstract**

The present invention has as its object to provide a method for producing green coffee beans that can be used to make coffee beverages with a fruity aroma.

During the process of producing green coffee beans, the following steps are performed: heating green coffee beans, and contacting the heated green coffee beans with an alcohol.

## Description

### TECHNICAL FIELD

The present invention relates to a method for producing an alcohol-containing green coffee beans. More specifically, this invention relates to a method for producing coffee beans containing high concentrations of an alcohol.

### BACKGROUND ART

Coffee beverages are widely enjoyed as highly palatable beverages. As a source material for coffee beverages, green or roasted coffee beans effective to produce coffee beverages with good flavor are needed. There have been some reports on techniques of enhancing the flavor of coffee. For example, PTL 1 discloses that green coffee beans are immersed in *Awamori* (a Japanese spirit brewed from indica rice), dried and roasted, and the roasted coffee beans are extracted to obtain a liquid extract. PTLs 2 and 3 disclose that green coffee beans are fermented by a microorganism and roasted, and the roasted coffee beans are extracted to obtain a coffee beverage composition containing ethyl isovalerate. PTL 4 discloses that in green or roasted coffee beans fermented by a microorganism, ethyl isovalerate and ethyl acetate are combined to enhance the flavor of coffee in an additive or synergistic manner. PTL 5 discloses that when green coffee beans are roasted in the presence of an alcohol such as ethanol, the flavor of coffee can be enhanced.

### CITATION LIST

### PATENT LITERATURES

PTL 1: Japanese Unexamined Patent Application Publication No. JP H08-266265
PTL 2: Japanese Unexamined Patent Application Publication No. JP 2011-160707
PTL 3: Japanese Unexamined Patent Application Publication No. JP 2010-75177
PTL 4: International Patent Publication No. WO 2011/108631
PTL 5: Japanese Unexamined Patent Application Publication No. JP 2018-102263

### SUMMARY OF INVENTION

### TECHNICAL PROBLEM

Fruity aroma is one of the flavors that coffee has. However, there are not so many reports on techniques of enhancing such a fruity flavor of coffee. Further, while some techniques of enhancing the fruity flavor of coffee have been disclosed, there is still room for improvement in terms of enhancing the intensity of the fruity flavor of coffee. Thus, the present invention has as its object to provide a method for producing green coffee beans that can be used to make coffee beverages with a fruity aroma.

### SOLUTION TO PROBLEM

During the process of studying a means for achieving the aforementioned object, the present inventors focused their attention on the presence of an alcohol as a fruity aroma precursor component in green coffee beans. As a result of conducting intensive studies to achieve the aforementioned object, the inventors found that when an alcohol is added to green coffee beans heated in advance, a large amount of the alcohol can be effectively attached to, and retained by, the green coffee beans. Based on this finding, the inventors have completed the present invention.

The present invention is directed, but not limited, to the following.
(1) A method for producing alcohol-containing green coffee beans, the method comprising the steps of:
   heating green coffee beans; and
   contacting the heated green coffee beans with an alcohol.
(2) The method as set forth in (1), wherein the green coffee beans are heated to achieve a bean surface temperature of not less than 35°C but less than 100°C.
(3) The method as set forth in (1) or (2), wherein the amount of the alcohol contacted with the heated green coffee beans is not less than 1 wt.% (w/w) based on the weight of the green coffee beans.
(4) A method for producing roasted coffee beans, the method comprising a step of roasting alcohol-containing green coffee beans obtained by the method as set forth in any one of (1) to (3).
(5) A method for producing a liquid coffee extract, the method comprising a step of extracting roasted coffee beans obtained by the method as set forth in (4) with water.
(6) A green coffee bean comprising not less than 1000 ppm (w/w) of an alcohol.
(7) A roasted coffee bean comprising not less than 10 ppm (w/w) of an acetic acid ester.
(8) The roasted coffee bean as set forth in (7), comprising not less than 500 ppm (w/w) of an alcohol.

### ADVANTAGEOUS EFFECTS OF INVENTION

According to the present invention, there can be provided a method for producing green coffee beans that can be used to make coffee beverages with a fruity aroma. Through roasting and extracting green coffee beans produced by the method of this invention, a liquid coffee extract having a significantly enhanced fruity aroma can be obtained. In the production method of this invention, an alcohol can be quantitatively and stably supplied to green coffee beans, and can be effectively attached to, and caused to remain in, green coffee beans. Also, the production method of this invention can be simply performed without the need for special equipment.

### DESCRIPTION OF EMBODIMENTS

### (Method for producing alcohol-containing green coffee beans)

One embodiment of the present invention is directed to a method for producing alcohol-containing green coffee beans, the method comprising the steps of: heating green coffee beans; and contacting the heated green coffee beans with an alcohol. By employing the structural characteristics as mentioned above, an alcohol can be effectively attached to, and caused to remain in, green coffee beans. Also, roasted coffee beans obtained by roasting the alcohol-containing green coffee beans of this invention can retain high concentrations of an acetic acid ester or an isovaleric acid ester. Further, by extracting said roasted coffee beans, a liquid coffee extract having a significantly enhanced fruity aroma can be provided. As referred to herein, the term "fruity aroma" refers to a fruit-like fermentation odor as perceived when smelling a ripe fruit. In the production method of this invention, the steps of heating green coffee beans and contacting the heated green coffee beans with an alcohol are performed in the order in which they appear above, but a different step may be interposed between the aforementioned steps, or the step of heating green coffee beans may be completed and immediately followed by the next step of contacting with an alcohol.

### (Green coffee beans)

As referred to herein, the term "green coffee beans" refers to coffee beans before being subjected to roasting treatment, and the term "roasted coffee beans" refers to coffee beans after being subjected to roasting treatment. In general, the roasting treatment of coffee beans, as referred to herein, refers to treatment of green coffee beans with heat at 100°C or higher. In the present invention, green coffee beans and roasted coffee beans may be distinguished by L-value (brightness) of coffee beans -- for example, coffee beans with an L-value of not less than 35 can be determined to be green coffee beans, and those with an L-value of less than 35 can be determined to be roasted coffee beans. The L-value of coffee beans can be measured using a color difference meter known to skilled artisans.

The species of green coffee beans used in the method of the present invention is not particularly limited -- the green coffee beans can be of any species, including Arabica, Robusta, or Liberica species. A single species of green coffee beans may be used alone, or two or more different species of green coffee beans may be used in combination. In this invention, green coffee beans of Arabica species are preferably used. The origin of green coffee beans used in the method of this invention is not particularly limited -- green coffee beans of any origin can be used.

### (Alcohol)

The alcohol used in the present invention can be an undiluted alcohol or can be an alcohol solution obtained by dissolving or diluting an alcohol with a solvent. As the alcohol solution, an aqueous alcohol solution is preferably used. As referred to above, the term "aqueous alcohol solution" refers to a mixture of an alcohol and an aqueous solvent -- for example, a mixture of an alcohol and water, or a mixture of an alcohol and an aqueous buffer. The alcohol content in the aqueous alcohol solution can be set as appropriate. The alcohol content can be measured by any known method. For example, when ethanol is used as an alcohol, the ethanol content can be determined using a vibrational densimeter. More specifically, the ethanol content can be determined by the following procedure. A sample to be measured is filtered or sonicated to remove carbon dioxide gas, and the CO₂-free sample is distilled under direct fire. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

The type of the alcohol used in the present invention is not particularly limited, and examples of the alcohol include, but are not limited to, methanol, ethanol, and propanol. A single type of alcohol may be used alone, or two or more different types of alcohols may be used in combination. In this invention, ethanol is preferably used. While not bound by any theory, it is considered that by contacting green coffee beans with an alcohol, followed by being subjected to roasting treatment, organic acids and other compounds present in the green coffee beans and the alcohol undergo a dehydration condensation reaction to form an ester. For example, it is considered that when ethanol is used as an alcohol, an ethyl ester compound such as ethyl acetate or ethyl isovalerate is formed in roasted coffee beans.

### (Heating step)

The method for producing alcohol-containing green coffee beans according to the present invention comprises a step of heating green coffee beans (hereinafter referred to as "heating step"). The procedure for heating green coffee beans is not particularly limited -- for example, green coffee beans can be heated by introducing the green coffee beans into a container such as vat or tray and heating the container. At the heating step, the green coffee beans are preferably stirred. By stirring the green coffee beans, they can be efficiently and evenly heated. The green coffee beans may be stirred continuously throughout the heating step, or may be stirred temporarily once or multiple times during the heating step.

At the heating step, the green coffee beans can be heated to achieve a bean surface temperature of not less than 35°C but less than 100°C. The bean surface temperature of the green coffee beans heated at the heating step is in the range of, for example, from 35 to 90°C, preferably from 40 to 80°C, more preferably from 45 to 70°C, still more preferably from 50 to 65°C. The heating step can be completed at the time when the bean surface temperature of the green coffee beans reaches the aforementioned temperature range. The bean surface temperature of the green coffee beans can be measured using a thermometer known to skilled artisans.

The time of heating the green coffee beans at the heating step is not particularly limited, and is in the range of, for example, from 1 to 120 minutes, preferably from 5 to 100 minutes, more preferably from 10 to 80 minutes. Although the effects of the present invention can be obtained even when the heating time exceeds 120 minutes, it is more likely that the alcohol can be more efficiently attached to, and caused to remain in, the green coffee beans when the heating time does not exceed 120 minutes.

At the heating step, the green coffee beans can also be heated so as to ensure that the green coffee beans have a moisture content of, for example, from 5 to 10%, preferably from 5.5 to 9.5%, more preferably from 6 to 9%. When the moisture content of the green coffee beans is reduced by heating, the alcohol can be effectively attached to, and caused to remain in, the green coffee beans. The moisture content of the green coffee beans can be measured using a moisture meter known to skilled artisans (*e.g*., a grain moisture tester produced by Kett Electric Laboratory).

### (Contact step)

The method for producing alcohol-containing green coffee beans according to the present invention comprises a step of contacting heated green coffee beans with an alcohol (hereinafter referred to as "contact step"). The procedure for contacting the heated green coffee beans with an alcohol is not particularly limited. For example, the heated green coffee beans may be contacted with an alcohol by spraying an alcohol solution (or an undiluted alcohol) onto the heated green coffee beans, or by immersing the heated green coffee beans in an alcohol solution (or an undiluted alcohol). At the contact step, the green coffee beans are preferably stirred. By stirring the green coffee beans, they can be efficiently and evenly contacted with an alcohol. The green coffee beans may be stirred continuously throughout the contact step, or may be stirred temporarily once or multiple times during the contact step.

At the contact step, the number of times of contacting the heated green coffee beans with an alcohol may be once or two or more times. The time of contacting the heated green coffee beans with an alcohol is not particularly limited, and can be set as appropriate. The contact of the heated green coffee beans with an alcohol may be performed after the heat treatment at the preceding heating step is completed, or may be performed simultaneously while the heat treatment is continued. The contact of the heated green coffee beans with an alcohol is preferably performed after the heat treatment at the preceding heating step is completed. The aforementioned heating and contact steps may be repeated two or more times.

At the contact step, the amount of an alcohol contacted with the heated green coffee beans is not particularly limited, and can be not less than 1 wt.% (w/w) based on the weight of the green coffee beans. Even when the amount of an alcohol is less than 1 wt.% (w/w), the effects of the present invention can be obtained, but it is more likely that the amount of the alcohol attached to and remaining in the green coffee beans may not be sufficient for the finally obtained liquid coffee extract to exhibit a fruity aroma. The amount of the alcohol is in the range of, for example, from 1 to 20 wt.% (w/w), preferably from 1.5 to 18 wt.% (w/w), more preferably from 2 to 15 wt.% (w/w), based on the weight of the green coffee beans. The upper limit of the amount of the alcohol can be 10 wt.% (w/w), 9 wt.% (w/w), 8 wt.% (w/w), 7 wt.% (w/w), 6 wt.% (w/w), 5 wt.% (w/w), 4 wt.% (w/w), 3 wt.% (w/w), or 2.5 wt.% (w/w), based on the weight of the green coffee beans. As the amount of the alcohol used is larger, the amount of the alcohol attached to and remaining in the green coffee beans is increased. However, when the amount of the alcohol exceeds 20 wt.% (w/w), it is more likely that the fruity aroma of the finally obtained liquid coffee extract may be excessively strong. Additionally, the amount or concentration of an alcohol as indicated herein refers to an alcohol amount or concentration calculated in terms of pure alcohol.

### (Cooling step)

In the present invention, after the heated green coffee beans are contacted with an alcohol, the green coffee beans can be cooled. In this invention, such a step of cooling the green coffee beans contacted with an alcohol (hereinafter referred to as "cooling step") can be provided separately from the aforementioned two steps. At the cooling step, the green coffee beans contacted with an alcohol may be cooled by leaving them to stand at room temperature, or may be cooled using a cooling system known to skilled artisans. The cooling step can be completed at the time when the bean surface temperature of the green coffee beans contacted with an alcohol drops below room temperature.

The time of cooling the green coffee beans at the cooling step is not particularly limited, and is in the range of, for example, from 5 to 60 minutes, preferably from 10 to 50 minutes, more preferably from 15 to 40 minutes. The effects of the present invention can be obtained even when the cooling time exceeds 60 minutes. At the cooling step, the green coffee beans can also be cooled so as to ensure that the green coffee beans have a moisture content of, for example, from 6 to 12%, preferably from 6.5 to 11%, more preferably from 7 to 10%.

### (Method for producing roasted coffee beans)

In the present invention, the alcohol-containing green coffee beans obtained by the method mentioned above can be roasted to produce roasted coffee beans. In other words, another embodiment of this invention is directed to a method for producing roasted coffee beans, the method comprising a step of roasting alcohol-containing green coffee beans obtained by the method mentioned above.

In the present invention, the method for producing roasted coffee beans can also be described as a method for producing roasted coffee beans, the method comprising the steps of:
heating green coffee beans;
contacting the heated green coffee beans with an alcohol; and
roasting the green coffee beans contacted with the alcohol.

Further, when the aforementioned cooling step is incorporated, the method for producing roasted coffee beans according to the present invention can be described as a method for producing roasted coffee beans, the method comprising the steps of:
heating green coffee beans;
contacting the heated green coffee beans with an alcohol;
cooling the green coffee beans contacted with the alcohol; and
roasting the green coffee beans.

In the production method of the present invention, the respective steps are performed following the order in which they appear in the text, but a different step may be interposed between the aforementioned steps, or one step may be completed and immediately followed by the next step.

### (Roasting step)

The method for producing roasted coffee beans according to the present invention comprises a step of roasting alcohol-containing green coffee beans as mentioned above (hereinafter referred to as "roasting step"). The procedure for roasting alcohol-containing green coffee beans is not particularly limited, and the alcohol-containing green coffee beans can be roasted using a procedure known to skilled artisans. At the roasting step, different conditions including temperature, time and L-value can be set, as appropriate, depending on the desired degree of roasting. As mentioned above, the roasted coffee beans obtained by the method of this invention may be identified by the L-value of coffee beans -- for example, the roasted coffee beans obtained by the method of this invention have an L-value of less than 35.

### (Method for producing a liquid coffee extract)

In the present invention, the roasted coffee beans obtained by the method mentioned above can be extracted to produce a liquid coffee extract. In other words, another embodiment of this invention is directed to a method for producing a liquid coffee extract, the method comprising a step of extracting roasted coffee beans obtained by the method mentioned above with water.

In the present invention, the method for producing a liquid coffee extract can also be described as a method for producing a liquid coffee extract, the method comprising the steps of:
heating green coffee beans;
contacting the heated green coffee beans with an alcohol;
roasting the green coffee beans; and
extracting the roasted coffee beans with water.

Further, when the aforementioned cooling step is incorporated, the method for producing a liquid coffee extract according to the present invention can be described as a method for producing a liquid coffee extract, the method comprising the steps of:
heating green coffee beans;
contacting the heated green coffee beans with an alcohol;
cooling the green coffee beans contacted with the alcohol;
roasting the green coffee beans; and
extracting the roasted coffee beans with water.

By employing the structural characteristics as mentioned above, a liquid coffee extract having a significantly enhanced fruity aroma can be provided. In the production method of the present invention, the respective steps are performed by following the order in which they appear in the text, but a different step may be interposed between the aforementioned steps, or one step may be completed and immediately followed by the next step.

### (Extraction step)

The method for producing a liquid coffee extract according to the present invention comprises a step of extracting roasted coffee beans with water (hereinafter referred to as "extraction step"). At the extraction step, roasted coffee beans are extracted with water to obtain a liquid coffee extract. During the process of extracting roasted coffee beans, various known procedures, such as paper-filter dripping procedure, funnel dripping procedure, siphon procedure, French press procedure, espresso procedure, and water procedure, can be used differently depending on the intended purpose. The water used at the extraction step can be present in a solid, liquid or gaseous (vapor) state, but a liquid or gaseous (vapor) state of water is preferably applicable in this invention. The temperature of a liquid state of water is not particularly limited, but is preferably not less than 90°C (hot water). Other conditions for the extraction step, such as extraction temperature and time, can be set as appropriate.

The liquid coffee extract produced by the method of the present invention may be concentrated depending on the need. Concentration can be performed using a common procedure including, but not limited to, freeze-drying, evaporation, or ultrafiltration membrane. The liquid coffee extract produced by the method of this invention can also be processed into not only a liquid form but also various forms including emulsion (e.g., oil-in-water emulsion, water-in-oil emulsion), paste, gel, powder, granule, tablet, and capsule.

### (Alcohol-containing green coffee beans)

The green coffee beans produced with the addition of an alcohol by the method of the present invention are characterized by comprising high concentrations of an alcohol, and, for example, comprise not less than 1000 ppm (w/w) of an alcohol. In other words, another embodiment of this invention is directed to a green coffee bean comprising not less than 1000 ppm (w/w) of an alcohol. The green coffee beans of this invention can be produced according to the method of this invention as mentioned above.

The alcohol content in the green coffee bean of the present invention is in the range of, for example, from 1000 to 30000 ppm (w/w), preferably from 5000 to 25000 ppm (w/w), more preferably from 7000 to 20000 ppm (w/w), still more preferably from 9000 to 15000 ppm (w/w). Even when the alcohol content in the green coffee bean of this invention falls below 1000 ppm (w/w), the effects of the present invention can be obtained, but it is likely that the fruity aroma of the finally obtained liquid coffee extract may not be so strong as expected. As the alcohol content in the green coffee bean is larger, the fruity aroma of the finally obtained liquid coffee extract is stronger. However, when the alcohol content in the green coffee bean exceeds 30000 ppm (w/w), the fruit aroma of the finally obtained liquid coffee extract may be excessively strong. The alcohol content in the green coffee beans can be measured using a procedure known to skilled artisans, such as gas chromatography as used in working examples described later.

The type of the alcohol contained in the green coffee beans of the present invention is not particularly limited, and examples of the alcohol include, but are not limited to, methanol, ethanol, and propanol. A single type of alcohol may be contained alone, or two or more different types of alcohols may be contained in combination. Preferably, ethanol is contained in the green coffee beans of this invention.

### (Roasted coffee beans produced by the method of the present invention)

The roasted coffee beans produced by the method of the present invention are characterized by comprising high concentrations of an acetic acid ester, and, for example, comprise not less than 10 ppm (w/w) of an acetic acid ester. In other words, another embodiment of this invention is directed to a roasted coffee bean comprising not less than 10 ppm (w/w) of an acetic acid ester. The green coffee beans of this invention can be produced using the method of this invention comprising a roasting step as mentioned above.

The content of an acetic acid ester in the roasted coffee bean of the present invention is in the range of, for example, from 10 to 300 ppm (w/w), preferably from 30 to 250 ppm (w/w), more preferably from 50 to 200 ppm (w/w), still more preferably from 70 to 150 ppm (w/w). Even when the content of an acetic acid ester in the roasted coffee bean falls below 10 ppm (w/w), the effects of the present invention can be obtained, but it is likely that the fruity aroma of the finally obtained liquid coffee extract may not be so strong as expected. As the content of an acetic acid ester in the roasted coffee bean is larger, the fruity aroma of the finally obtained liquid coffee extract is stronger. However, when the content of an acetic acid ester in the roasted coffee bean exceeds 300 ppm (w/w), the fruit aroma of the finally obtained liquid coffee extract may be excessively strong. The content of an acetic acid ester in the roasted coffee beans can be measured using a procedure known to skilled artisans, such as gas chromatography-mass spectroscopy as used in working examples described later.

The type of the acetic acid ester contained in the green coffee beans of the present invention is not particularly limited, and examples of the acetic acid ester include, but are not limited to, methyl acetate, ethyl acetate, and propyl acetate. A single type of acetic acid ester may be contained alone, or two or more different types of acetic acid esters may be contained in combination. Preferably, ethyl acetate is contained in the green coffee beans of this invention.

Further, the roasted coffee beans produced by the method of the present invention are characterized by comprising not only high concentrations of an acetic acid ester but also high concentrations of an alcohol. The alcohol content in the green coffee bean of this invention is in the range of, for example, from 500 to 12000 ppm (w/w), preferably from 1000 to 10000 ppm (w/w), more preferably from 2000 to 8000 ppm (w/w), still more preferably from 3000 to 6000 ppm (w/w). Even when the alcohol content in the green coffee bean of this invention falls below 500 ppm (w/w), the effects of the present invention can be obtained, but it is likely that the fruity aroma of the finally obtained liquid coffee extract may not be so strong as expected. As the alcohol content in the green coffee bean is larger, the fruity aroma of the finally obtained liquid coffee extract is stronger. However, when the alcohol content in the green coffee bean exceeds 12000 ppm (w/w), the fruit aroma of the finally obtained liquid coffee extract may be excessively strong. The alcohol content in the green coffee beans can be measured using a procedure known to skilled artisans, such as gas chromatography as used in working examples described later.

The type of the alcohol contained in the green coffee beans of the present invention is not particularly limited, and examples of the alcohol include, but are not limited to, methanol, ethanol, and propanol. A single type of alcohol may be contained alone, or two or more different types of alcohols may be contained in combination. Preferably, ethanol is contained in the green coffee beans of this invention.

### EXAMPLES

Hereunder, the present invention will be described by way of working examples, but this invention is not limited to these examples.

### Experimental Example 1 Study on heating temperature

Water in a hot-water bath was set to a specified temperature using a thermostat. 500 g of green coffee beans (Arabica species produced in Ethiopia) were placed in a 5 L vat, and the opening of the vat was covered with an aluminum foil. The vat containing green coffee beans was put into water in a hot-water bath to heat the green coffee beans. During the heating, the green coffee beans were regularly stirred using a spatula. After the entire bean surface temperature of the green coffee beans was confirmed to reach the predetermined temperature (40 to 80°C) using a contact-type thermometer, ethanol was sprayed onto the entire green coffee beans using a sprayer. After the spraying, the lid of the sprayer was opened to directly add the remainder of ethanol to the green coffee beans. The heating time of the green coffee beans was set to not more than 1 hour (about 2 to 30 minutes), and the amount of ethanol sprayed (added) was set to 2.34 wt.% (w/w) based on the weight of the green coffee beans (*i.e*., 59% (v/v) ethanol was sprayed and added in an amount of 5 wt.% (w/w) based on the weight of the green coffee beans).

After ethanol was added, the green coffee beans were taken out from the vat and left standing to cool in open air at room temperature and thus decrease the bean surface temperature of the green coffee beans down to around room temperature. The cooling time of the green coffee beans after ethanol addition was not more than 1 hour. A portion of the green coffee beans was taken out and subjected to roasting treatment at 200°C for 10 minutes using a roaster (Sample Roaster produced by Probat). The coffee beans subjected to roasting treatment (*i*.*e*., roasted coffee beans) were placed in a bag and cooled down to around room temperature.

The green coffee beans and roasted coffee beans obtained by the aforementioned procedure were each measured for ethanol concentration in coffee beans. The measurement of ethanol concentration was performed by the procedure described below.

The green coffee beans and roasted coffee beans obtained in the aforementioned manner were each freeze-crushed. 3 g of the freeze-crushed green coffee beans or roasted coffee beans was added to 50 mL of water, and the obtained liquid was subjected to distillation. The resulting liquid distillate was made up with water to a volume of 25 mL to prepare a sample for gas chromatography. Gas chromatographic analysis was performed under the conditions detailed below.
Model: GC-2014 (produced by Shimadzu Corporation)
Column: Gaskuropack 55, 80- to 100-mesh (produced by GL Sciences)
Temperature: Sample inlet and detector: 250°C; column: 130°C
Gas flow rate: Nitrogen (carrier gas) at 25 mL/min.
Gas pressure: Hydrogen: 60 kPa; air: 50 kPa

**[Table 1]**

| | | Treatment temperature | | | | | |
|---|---|---|---|---|---|---|---|
| | | 25°C (with no heating) | 40°C | 50°C | 60°C | 70°C | 80°C |
| Ethanol conc. (ppm) | Green coffee beans | 62 | 9200 | 9200 | 10900 | 5300 | 7400 |
| | Roasted coffee beans | 42 | 3600 | 3900 | 4600 | 3400 | 2400 |

As shown above, it was demonstrated that when the treatment temperature was set to 40°C or higher, the ethanol concentration in the green coffee beans and roasted coffee beans was extremely high. Those green coffee beans and roasted coffee beans which were not subjected to heat treatment or ethanol addition had an ethanol concentration of 12 ppm and 16 ppm, respectively.

Next, the roasted coffee beans obtained through the aforementioned heat treatment were measured for ethyl acetate concentration. The measurement of ethyl acetate concentration was performed by the procedure described below.

The roasted coffee beans obtained in the aforementioned manner were freeze-crushed. 1 g of the freeze-crushed, roasted coffee beans were added to 30 mL of a solvent (water:hexane = 2:1) to prepare a sample. After 8 g of sodium chloride was added to the prepared sample, the mixture was shaken and centrifuged to extract ethyl acetate into the hexane phase. GC-MS analysis was performed under the conditions detailed below. Model: 6890A/5973N (produced by Agilent Technologies)
Column: DB-WAX (produced by Agilent Technologies)
Introduction system: Split ratio = 10:1
Temperature: Sample inlet: 220°C; column: 40°C (kept for 5 min.), then increasing at a rate of 10°C/min. to 150°C
Gas flow rate: Helium (carrier gas) at 1 mL/min.
Ion source temperature: 230°C
Ionization mode: EI

**[Table 2]**

| | | Treatment temperature | | | | | |
|---|---|---|---|---|---|---|---|
| | | 25°C (with no | 40°C | 50°C heating) | 60°C | 70°C | 80°C |
| Ethyl acetate conc. (ppm) | Roasted coffee beans | 10 | 74 | 75 | 78 | 33 | 63 |

The results are as shown above. It was demonstrated that when the treatment temperature was set to 40°C or higher, the ethyl acetate concentration in the roasted coffee beans was extremely high. Those roasted coffee beans which were not subjected to heat treatment or ethanol addition had an ethyl acetate concentration of 0 ppm (below the limit of detection).

### Experimental Example 2 Study on the amount of ethanol added

Green coffee beans were subjected to heat treatment and ethanol addition by using the same procedures as in Experimental Example 1. During the heat treatment, the bean surface temperature of the green coffee beans was set to 80°C. The amount of ethanol added was set to 1.17 wt.% (w/w), 3.51 wt.% (w/w), or 7.03 wt.% (w/w) based on the weight of the green coffee beans (*i.e*., 59% (v/v) of ethanol was sprayed and added in an amount of 2.5 wt.% (w/w), 7.5 wt.% (w/w), or 15 wt.% (w/w) based on the weight of the green coffee beans).

After ethanol was added, a portion of the green coffee beans was subjected to roasting treatment by the same procedure as in Experimental Example 1, to thereby obtain roasted coffee beans. The obtained green coffee beans and roasted coffee beans were each measured for ethanol concentration by using the same procedure as in Experimental Example 1. The roasted coffee beans were also measured for ethyl acetate concentration by the same procedure as in Experimental Example 1. The results are shown in the table given below. It should be noted that the below table also includes the results for the green and roasted coffee beans prepared with addition of 2.34 wt.% (w/w) of ethanol (with heat treatment at 80°C) in Experimental Example 1.

**[Table 3]**

| | | Amount of ethanol added | | | | |
|---|---|---|---|---|---|---|
| | | 0% | 1.17% | 2.34% | 3.51% | 7.03% |
| Ethanol conc. (ppm) | Green coffee beans | 12 | 1400 | 7400 | 7300 | 19600 |
| | Roasted coffee beans | 16 | 550 | 2400 | 3100 | 8900 |
| Ethyl acetate conc. (ppm) | Roasted coffee beans | 0 | 14 | 63 | 110 | 170 |

As shown above, it was demonstrated that when the amount of ethanol added was set to 1.17 wt.% (w/w) or higher based on the weight of the green coffee beans, the ethanol concentration in the green coffee beans and roasted coffee beans was extremely high, and the ethyl acetate concentration in the roasted coffee beans was also extremely high.

It is known that ethyl acetate is one of the components contributing to the fruit aroma perceived in a liquid extract of roasted coffee beans. Therefore, it can be concluded that all of the green coffee beans and roasted coffee beans prepared with heat treatment in Experimental Examples 1 and 2 as mentioned above are useful as a source material for coffee beverages having a fruity aroma.

### Experimental Example 3 Sensory evaluation

The roasted coffee bean samples prepared in Experimental Examples 1 and 2 were subjected to sensory evaluation. To be specific, the different roasted coffee bean samples were each extracted with hot water to prepare a liquid coffee extract. The thus-prepared liquid coffee extracts were subjected to sensory evaluation for fruity aroma by five professional panelists according to the rating scale detailed below. During the sensory evaluation, the ratings given by each panelist on his or her own accord were discussed among all the panelists, and the final ratings were assigned in consensus among them.

### <Rating scale>

- 5 points:: A strong fruity aroma is perceived, and also well balanced with the taste of coffee.
- 4 points:: A strong fruity aroma is perceived.
- 3 points:: A fruity aroma is perceived.
- 2 points:: Only a weak fruity aroma is perceived.
- 1 point:: Little or no fruity aroma is perceived.

**[Table 4]**

| | Treatment temperature | | | |
|---|---|---|---|---|
| | 25°C (with no heating) | 40°C | 70°C | 80°C |
| Sensory rating | 3 | 4 | 5 | 5 |

The results of sensory evaluation of the roasted coffee beans prepared in Experimental Example 1 are shown in the table given above. As shown in the above table, it was demonstrated that when the treatment temperature was set to 40°C or higher, the samples received a sensory rating of 4 points or higher. Additionally, those roasted coffee beans which were not subjected to heat treatment or ethanol addition received a sensory rating of 1 point.

**[Table 5]**

| | Amount of ethanol added | | | |
|---|---|---|---|---|
| | 0% | 1.17% | 2.34% | 3.51 % |
| Sensory rating | 1 | 4 | 5 | 4 |

The results of sensory evaluation of the roasted coffee beans prepared in Experimental Example 2 are shown in the table given above. As shown in the above table, it was demonstrated that when the amount of ethanol added was set to 1.17 wt.% (w/w) or more based on the weight of the green coffee beans, the samples received a sensory rating of 4 points or higher.

### Experimental Example 4 Measurement of moisture content

Among the samples prepared in Experimental Example 1, the sample prepared with heat treatment to 70°C and the one prepared by treatment at 25°C (with no heating) were measured for moisture content during different steps using a grain moisture tester (PM-600 produced by Kett Electric Laboratory). The results are shown in the table given below.

**[Table 6]**

| | | Treatment temperature | |
|---|---|---|---|
| | | 25°C (with no heating) | 70°C |
| Moisture content (%) | Before heating | 8.1 | 10.9 |
| | After heating | - | 6.3 |
| | Just after ethanol addition | 10.1 | 5.3 |
| | 30 min. after ethanol addition | - | 7.7 |
| | After roasting | 1.0 | 1.0 |

## Claims

1. A method for producing alcohol-containing green coffee beans, the method comprising the steps of:
heating green coffee beans; and
contacting the heated green coffee beans with an alcohol.

2. The method according to claim 1, wherein the green coffee beans are heated to achieve a bean surface temperature of not less than 35°C but less than 100°C.

3. The method according to claim 1 or 2, wherein the amount of the alcohol contacted with the heated green coffee beans is not less than 1 wt.% (w/w) based on the weight of the green coffee beans.

4. A method for producing roasted coffee beans, the method comprising a step of roasting alcohol-containing green coffee beans obtained by the method according to any one of claims 1 to 3.

5. A method for producing a liquid coffee extract, the method comprising a step of extracting roasted coffee beans obtained by the method according to claim 4 with water.

6. A green coffee bean comprising not less than 1000 ppm (w/w) of an alcohol.

7. A roasted coffee bean comprising not less than 10 ppm (w/w) of an acetic acid ester.

8. The roasted coffee bean according to claim 7, comprising not less than 500 ppm (w/w) of an alcohol.
